# EUROPEAN PATENT SPECIFICATION

(11) **EP 0 421 662 B1**
(45) Date of publication and mention of the grant of the patent: **22.11.1995**
(21) Application number: 90310522.9
(22) Date of filing: 26.09.1990
(51) Int. Cl.: B29D 30/06, B29C 35/02

(54) **Vulcanisation method for an elastomer product**
Verfahren zur Vulkanisation eines Produkts aus Elastomer
Procédé de vulcanisation d'un produit élastomère

(30) Priority: 30.09.1989 JP 256829/89; 22.11.1989 JP 303922/89
(43) Date of publication of application: 10.04.1991
(73) Proprietor: SUMITOMO RUBBER INDUSTRIES LIMITED, Chuo-ku Kobe-shi Hyogo 651 (JP)
(72) Inventor: Kobayashi, Michihito, Toyota-shi, Aichi (JP)
(74) Representative: Stewart, Charles Geoffrey

(56) References cited:
- EP-A- 0 050 956
- DE-A- 1 729 839
- US-A- 4 222 721
- PATENT ABSTRACTS OF JAPAN vol. 11, no. 215 (M-606)(2662) July 11, 1987 & JP-A-62 33 611 (SUMITOMO RUBBER INDUSTRIES) February 13, 1987

## Description

The present invention relates to a method of vulcanisation of elastomer products, especially of rubber tyre for vehicles, using gas as a pressurising medium.

The present applicant disclosed a method of vulcanisation of elastomer products such as a rubber tyre for a vehicle in the Unexamined Japanese Patent Publication SHO 57-74142, whose outline is as follows: As illustrated in Figures 6A and 6B, green rubber tyre 2 is placed in a mould 1 and a bladder 3 is inflated so as to provide the inner surface of the mould. Alternatively, without the use of the bladder 3, a heating medium or steam or heated gas of a predetermined temperature and pressure is supplied directly into the internal space 6. In each case the "outlet" pipe line is closed and therefore steam does not circulate, i.e. in a dead-end state. When the tyre 2 reaches the standard temperature for vulcanisation, or after a standard time, the supply of the heating medium is stopped and a pressurising medium (a combustion gas, nitrogen gas or others) with the same or a higher pressure than the heating medium is supplied to the interior of the tyre through a blowing exit 5 positioned in the central mechanism of the vulcanisation machine. Once again the "outlet" pipe is kept closed to prevent circulation of gas. By this high pressure gas, the internal pressure in the tyre 3 is maintained at the same level or raised to a higher level and maintained until the end of the remaining period of the heating steps for vulcanisation. Then in the case of Nylon 6 tyre carcass ply material or when adjustment of the degree of vulcanisation is required for a tyre carcass of another material, cooling water is circulated in the space 6 after completion of the heating process and thus the tyre 2 is cooled down to a predetermined temperature. After this procedure, the fluid mixture of the heating and pressurising medium or the fluid mixture of the heating medium and cooling water is exhausted (into the atmosphere) through an exhaust line. Then by applying vacuum, the bladder is shrunk to assist removal from the tyre 2 and the mould 1 is opened and the vulcanised tyre 2 is taken out to end the vulcanisation process. This cooling process may not be applied to a tyre whose carcass ply is made of Nylon 66, polyester or steel cord.

In another method disclosed by United States Patent 4 222 721 an apparatus is described which provides means to purge high temperature hot water curing medium from the internal space of a tyre with an inert gas prior to the introduction therein of cooling water thereby conserving energy by avoiding mixing of the hot and cold water.

A difficulty when cooling water is circulated in the internal space of the tyre in the cooling process is that the fluid mixture (gas) remains in the upper part X of the internal space 6 and cooling of the upper side wall part 7 of the tyre 2 is effected and, as a result, a large temperature difference (typically 50°C) between the upper side wall 7 and other parts, especially the lower side wall results and this temperature difference cannot completely be removed until the end of whole vulcanisation process. Therefore the degree of vulcanisation in the upper and the lower parts of the tyre is different and this causes tyre quality deterioration. Also the cooling time required to prevent loss of cord strength for Nylon 6 is too long and this results in markedly decreased productivity.

Furthermore, when cooling water is employed in the gas vulcanisation, any leak from the cooling water valve goes into the internal space of the tyre, which gives rise to undercure trouble (deficient vulcanisation). Moreover the pipe line and the bladder are cooled down by the cooling water and drainage of heating medium (steam) in the internal space of the tyre is accelerated to delay the vulcanisation.

Additionally, another disadvantage which takes place in the heating process of the vulcanisation system using gas as a pressurising medium is that drain water from the steam stays in the tyre side wall region of the lower mould and after supply of the pressurised fluid, gas also stays in the ares of the tyre bead of the shoulder portion in the lower mould, due to insufficient mixing. This causes a temperature difference between the area from the tyre bead to the shoulder portion in the upper mould and from the tyre bead to the shoulder portion in the lower mould. Consequently, a tyre vulcanisation time has had to be determined in accordance with the cure of, for example, the tyre bead of tyre shoulder portion in the lower mould, where vulcanisation goes slowest. However, such a counter measure causes a problem in that the upper tyre bead or shoulder portion in the upper mould in opposite would inevitably result in an overcure compared with the tyre bead or tyre shoulder portion in the lower mould.

Generally the longer the steam heating time becomes, the higher the temperature of both upper and lower tyre bead or tyre shoulder portions becomes with the temperature difference noted above. However, an excessively long time of the steam process would cause an excessively high temperature of the upper tyre bead or shoulder portion, which would deteriorate the physical properties of the cords and the rubber of the carcass in the upper mould.

As for the lower tyre bead or shoulder portion in the lower mould, a higher temperature is obtained by heating for a longer time and this contributes to shorten vulcanisation time and improve productivity. Nevertheless, in order to prevent the temperature of the upper tyre bead or shoulder portion noted above at the upper mould from rising excessively, the heating time is generally determined for the purpose of controlling the temperature of the upper tyre bead shoulder portion at the upper mould.

However, desirable improvement in the vulcanisation process to raise productivity (i.e. shortening of the cure time) lies in achievement of faster temperature rise on the lower tyre bead or shoulder portion where vulcanisation goes slowest and in achievement of temperature rise in the lower tyre bead or shoulder portion to a level where physical properties of tyre components are not deteriorated, without inviting an excessively high temperature of the upper tyre bead or shoulder portion at the upper mould.

An object of the present invention is to solve the above problems and to provide a vulcanisation method, where homogeneity in the degree of vulcanisation is obtained by cooling without giving rise to temperature difference between different parts of the elastomer product and furthermore to prevent undercure troubles or delay in vulcanisation.

According to one aspect the present invention a method of vulcanising an elastomer product in a mould having an inlet and an outlet pipe comprises the steps of curing an elastomer product in a mould, the mould having an inlet and an outlet pipe, the method comprising the steps of placing the elastomer product in a mould, supplying a heating steam or gas into an interior of said elastomer product through the inlet pipe to effect vulcanisation, supplying a pressurising gas through said inlet pipe with said outlet pipe open in order to cool the interior of said elastomer product by replacing at least a portion of said heating steam or gas present in the interior of said elastomer product with said pressurising gas, closing the outlet pipe while further supplying pressurising gas through said inlet pipe for further pressurising a mixed gas comprised of said heating steam or gas and said pressurising gas present in the interior of said elastomer product, and closing the inlet pipe and opening the outlet pipe to exhaust the mixed gas present in the interior of said elastomer product, whereby the steps are carried out sequentially in the given order.

According to another aspect of the present invention a method of curing an elastomer product in a mould, the mould having an inlet and an outlet pipe, the method comprises curing an elastomer product in a mould, the mould having an inlet and an outlet pipe, the method comprising the steps of placing the elastomer product in the mould, supplying a heating steam or gas into an interior of said elastomer product through the inlet pipe to effect vulcanisation, supplying a pressurising gas for further pressurising said heating steam or gas present in the interior of said elastomer product through the inlet pipe with the outlet pipe closed, opening the outlet pipe while further supplying pressurising gas through said inlet pipe in order to cool the interior of said elastomer product by replacing at least a portion of a mixed gas comprised of said heating steam or gas and said pressurising gas present in the interior of said elastomer product with said pressurising gas, and closing the inlet pipe and opening the outlet pipe to exhaust a mixed gas comprised of said heating steam or gas, said pressurising gas present in the interior of said elastomer product at the end of vulcanisation whereby the steps are carried out sequentially in the given order.

According to a further aspect of the present invention a method of curing an elastomer product in a mould, the mould having an inlet and an outlet pipe, the method comprises the steps of placing the elastomer product in the mould, supplying a heating steam or gas into an interior of said elastomer product through the inlet pipe to effect vulcanisation, supplying a first pressurising gas for further pressurising said heating steam or gas present in the interior of said elastomer product through the inlet pipe with the outlet pipe closed, opening the outlet pipe while further supplying the first pressurising gas through said inlet pipe in order to cool the interior of said elastomer product by replacing at least a portion of a mixed gas comprised of said heating steam or gas and said first pressurising gas present in the interior of said elastomer product with said first pressurising gas, closing the outlet pipe and supplying a second pressurising gas for further pressurising a mixed gas comprised of said heating steam or gas, said first pressurising gas present in the interior of said elastomer product through the inlet pipe and closing the inlet pipe and opening the outlet pipe to exhaust a mixed gas comprised of said heating steam or gas, and said first and second pressurising gases present in the interior of said elastomer product at the end of vulcanisation whereby the steps are carried out separately in the given order.

According to a further aspect of the intention a method of curing an elastomer product in a mould, the mould having an inlet pipe and an outlet pipe, the method comprising the steps of placing the elastomer product in a mould, supplying a heating steam or gas into an interior of said elastomer product through the inlet pipe to effect vulcanisation, closing the outlet pipe while supplying a pressurising gas through said inlet pipe for further pressurising the heating steam or gas present in the interior of said elastomer product, opening the outlet pipe while supplying the pressurising gas through said inlet pipe in order to cool the interior of said elastomer product by replacing at least a portion of a mixed gas comprised of said heating steam or gas and said pressurising gas present in the interior of said elastomer product, closing the outlet pipe while further supplying the pressurising gas through said inlet pipe for further pressurising the mixed gas present in the interior of said elastomer product, opening the outlet pipe while supplying the pressurising gas through said inlet pipe in order to cool the interior of said elastomer product by replacing at least a portion of the mixed gas present in the interior of said elastomer product, closing the outlet pipe while further supplying the pressurising gas through said inlet pipe for further pressurising the mixed gas present in the interior of said elastomer product, closing the inlet pipe and opening the outlet pipe to exhaust the mixed gas present in the interior of said elastomer product, whereby the steps are carried out sequentially in the given order.

The step of opening the exhaust/stroke outlet pipe to provide control exhaustion of the heated fluid mixture may be repeated to absorb further heating medium. The heating medium and/or the pressurising medium may comprise gas mixtures.

The apparatus is preferably equipped in its outlet pipe with an adjustable restriction by means of an orifice having a diameter less than 20 mm. This diameter can be adjusted as required.

Thus in the invention at least part of or the whole of the heated fluid mixture filling the internal space in the elastomer product is gas-purged for a controlled pre-determined period and replaced by unheated pressurising medium such that the elastomer product is cooled down at the desired controlled rate. Further in gas-purging the flow rate of exhaust is adjusted by the orifice so that the pressure drop in the internal space of the product is controlled so that no large temperature difference results in different portions of the product and efficient cooling is obtained without an unfavourable pressure drop. Therefore, the present invention can not only provide a homogeneity in the degree of vulcanisation, but certainly prevent troubles such as a delay of vulcanisation.

In one aspect the gas-purging is carried out immediately after the completion of the heating medium supply process and prior to the start of the pressurising medium supply process.

Thus the temperature of the upper tyre bead or shoulder portion at the upper mould where vulcanisation goes faster is prevented from rising excessively while the temperature rise in the lower tyre bead or shoulder portion at the lower mould is accelerated, with a result that homogeneous cure at the upper and lower tyre bead or shoulder portions at both the upper and lower moulds and a shorter cure time are realised.

Further aspects of the invention will be apparent from the following description, by way of example, of some embodiments, in conjunction with the attached diagrammatic drawings in which:
Figure 1(A) is a part sectional view of a right half of a tyre vulcanisation machine showing the control system for the "outlet" pipe line and "inlet" pipe line systems thereof;
Figure 1(B) shows the outlet pipe line control system of Figure 1(A) modified to allow gas recovery;
Figure 2(A) is a diagram showing the relation between temperature and time for gas-purge cooling in the gas supply process;
Figure 2(B) is a graph showing the relation between temperature and time when gas-purge cooling was undertaken after the gas supply process;
Figure 3 is a graph showing the temperature difference between the upper and lower side walls of a tyre in the mould when gas-purge cooling was undertaken twice in the gas supply process;

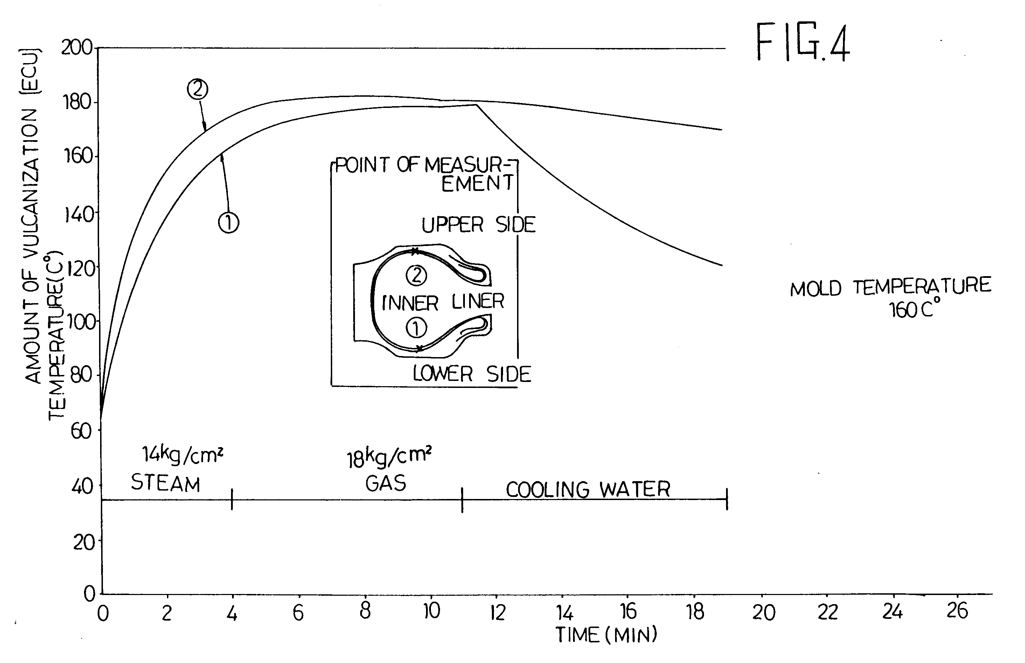

Figure 4 is a graph showing the temperature difference between the upper and lower side walls of a tyre in the mould using gas vulcanisation with the conventional cooling method;
Figure 5(A) is a graph showing the temperature to time relationship when the gas-purge of the second embodiment of the present invention was undertaken immediately after the completion of the supply process of the heating medium;
Figure 5(B) is a graph showing the temperature to time relationship for a process where a heating time was prolonged without carrying out the gas-purge;
Figure 5(C) is a graph showing the temperature to time relationship for a process where a normal heating time (to avoid overheating of the upper mould) was employed without cooling by the gas-purge;

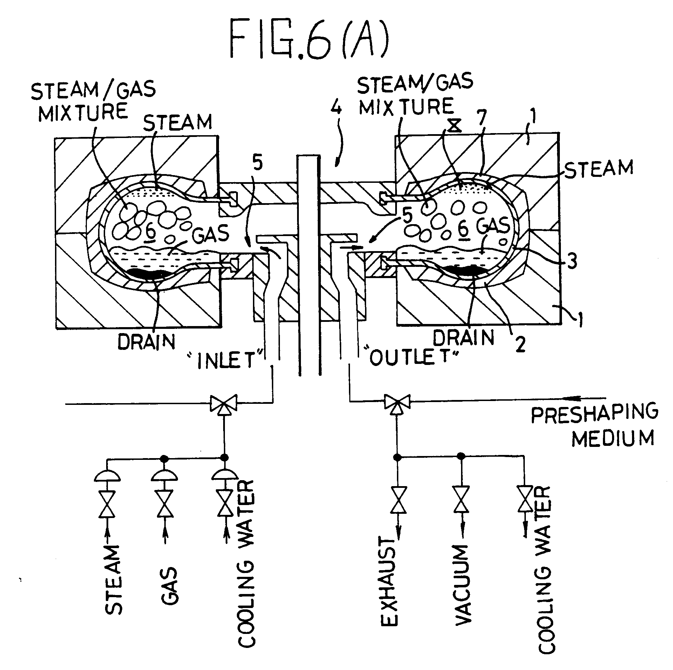

Figure 6(A) is a part sectional view of a vulcanisation machine and a diagram showing the internal pipe line system thereof, for achieving gas vulcanisation by use of the conventional cooling system; and
Figure 6(B) is a diagram showing the process of gas vulcanisation by use of the conventional method.

The gas vulcanisation method according to the present invention is principally the same as the conventional method except for the cooling process and the explanation is therefore abbreviated.

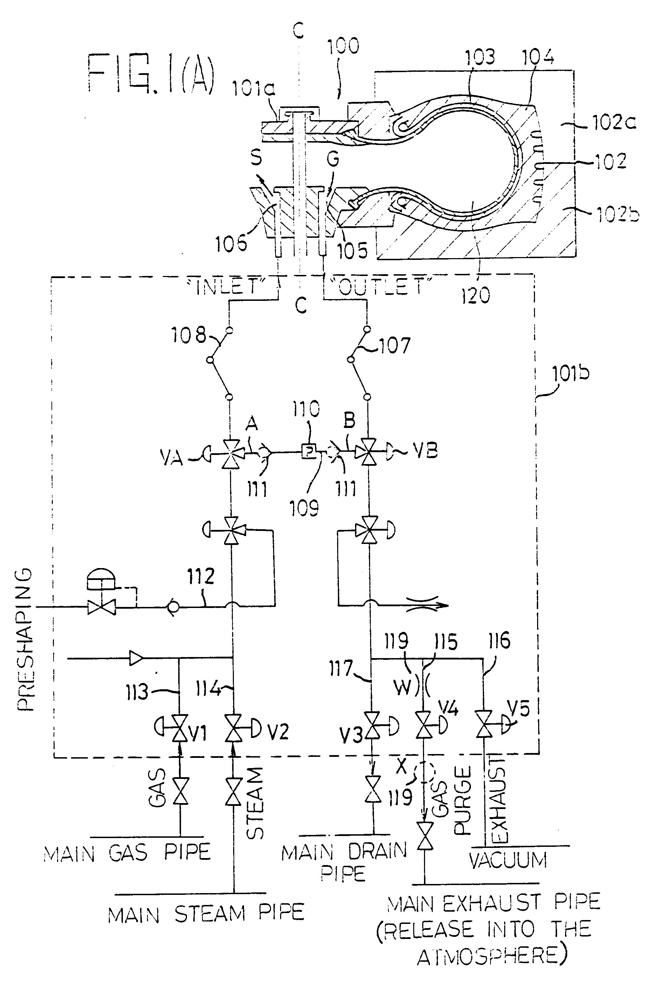

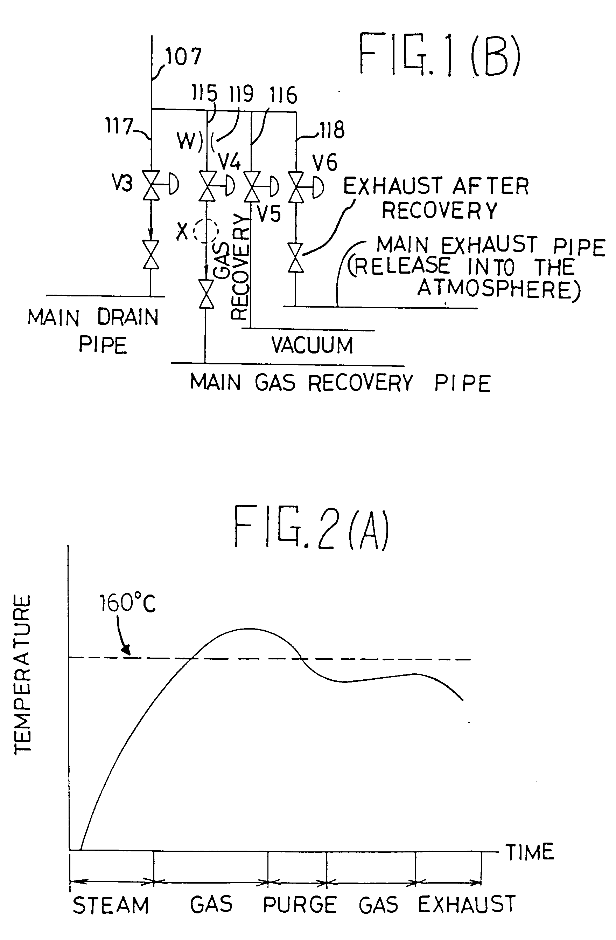

Figure 1A shows the vulcanisation apparatus 100 which is composed of a mould assembly 101a and internal pipe line system 101b. The mould assembly 101a includes a mould 102, composed of an upper mould 102a and a lower mould 102b, and bladder 103 in the form of a rubber bag. An unvulcanised tyre 104 is placed between the upper and lower mould 102a,102b and subjected to heat and pressure by means of the bladder 103. In another example, no bladder is employed.

A blowing port 106 and an exhaust 105 in the main part of the vulcanisation machine 101a are each connected to a supply source, although not shown in the Figure, of vulcanisation medium by an internal pipe line system 101b. The internal pipe line system 101b can be separated into an "inlet" port, which supplies vulcanisation medium to the vulcanisation machine 101a, and an "outlet" port, which takes out used vulcanisation medium exhausted from the main part 101a. In this Figure, 107 is a flexible pipe line at the "outlet" port and 108 is a flexible pipe at the "inlet" port.

In an internal pipe line system 101b of this vulcanisation machine 100, a circulation pipe 109 for a forced circulation pathway of vulcanisation medium is positioned between the "inlet" and "outlet" sides, as in the previous application filed by the present applicant (Unexamined Japanese Patent Publication SHO 62-33611). This pipe line has an adjustment valve VA at the "inlet" side and an adjustment valve VB at the "outlet" side. A pump P and a back-flow protection valve 111 are installed for a forced circulation equipment 110 and the vulcanisation medium in the internal space of the tyre can be forcibly circulated during the vulcanisation to eliminate temperature fluctuations by an effect similar to forced stirring in the mould. 112 is a supply pipe for fluid (gas, steam or the like) for a preshaping process prior to the heating process and 113 is a supply pipe for a pressurising medium (low temperature gas such as nitrogen or the like). 114 is a supply pipe for a heating medium (steam and heated gas). These three along with the above flexible pipe line 108 constitute the "inlet" pipe line system. 115 is a gas exhaust pipe for a fluid mixture and 116 is a vacuum pipe and 117 is a drain pipe. These three along with the above flexible pipe line 107 constitute the "outlet" pipe line system. By connecting a gas exhaust pipe 115 to the main recovery pipe, as shown in Figure 1(B), the exhaust gas can be recovered and re-used for preshaping.

In the above "outlet" pipe line system, an orifice 119 of the known structure is installed at a position W in front of an automatic adjustment valve V4 for the gas exhaust pipe (or gas recovery pipe) 115 or at a position X (illustrated by a broken circle) after an automatic adjustment valve V4 to adjust the pipe line flow. The diameter of the orifice 119 is less than 20 mm, preferably in the range 3.0 mm to 10 mm. If the orifice diameter is too large, the pressure loss in the internal space 120 of the tyre becomes too large on purging the gas, which gives rise to defects in outside appearance of the tyre such as bareness, porosity on the tyre surface and troubles such as double moulding of lettering on the side wall. On the other hand, if the orifice diameter is too small, pressure loss can be avoided, but it takes too long for gas-purging to give the cooling effect at the desired level and also blocking of the pipe tends to occur.

In use of the vulcanisation apparatus when, or after the step of supplying pressurising medium in which gas is continuously supplied while keeping the "outlet" pipe line in a closed state (dead end) in a similar way to the supply process for the heating medium, an "outlet" pipe line 115, with the above orifice 119, is opened for a predetermined time and at least part of or the whole of the fluid mixture of a heated steam and a gas, which fills the internal space 120 of the tyre 104 in the mould 102, is exhausted.

At the same time as this exhaust operation, an unheated pressurising fluid (a new gas from a gas tank, which has never been introduced into the internal space 120 of the tyre or a used gas through a pipe line 109 in the case of a vulcanisation machine having a forced circulation pipe line 109) is introduced to fill the internal space 120 of the tyre. Thus the fluid mixture at a higher temperature in the internal space 120 of the tyre is replaced by a pressurising fluid at a low temperature, that is, a gas-purge cooling is undertaken.

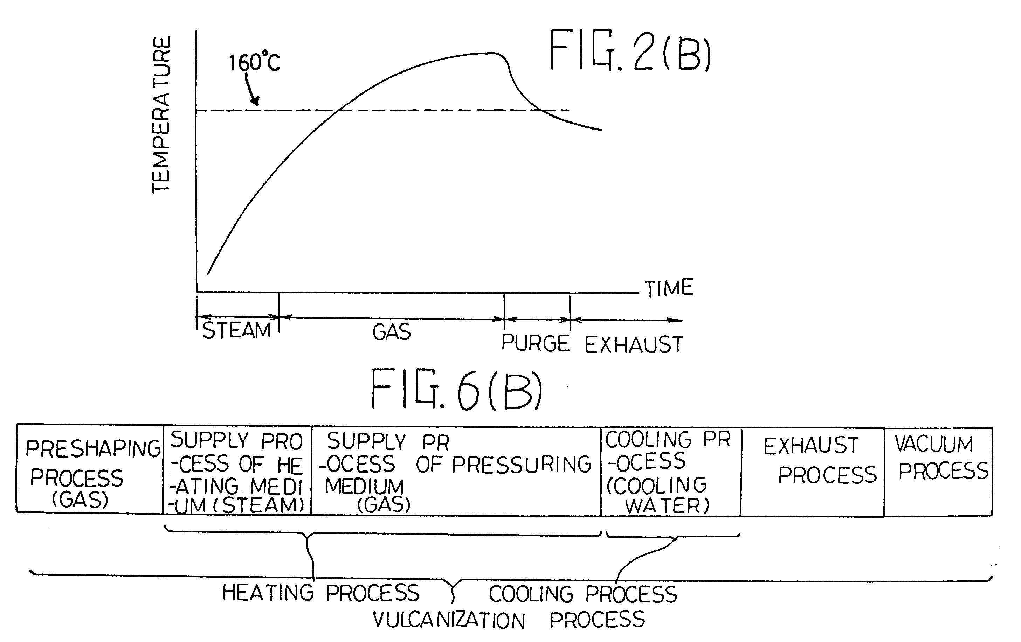

The timing of the gas-purge cooling depends on the cooling requirement. In other words, in the case where the tyre is made of a Nylon 6 cord carcass (Nylon 6 cord is generally known to suffer a decrease of elongation strength when tension is removed by releasing the pressure to zero at the end of the vulcanisation from a state where tension has been applied to the cord during vulcanisation at a temperature higher than 160°C) the cooling is undertaking only to protect the decrease of strength of nylon cord. Thus it is safe if the tyre temperature is decreased to lower than 160°C by the time of release of the pressure of the internal tyre space at the end of vulcanisation. Therefore, a gas-purge cooling step can, as shown in Figure 2(A), either be undertaken in a supply step of a pressurising medium (gas), or as shown in Figure 2(B), be undertaken after a supply step of a pressurising medium (gas and prior to a gas exhaust process) (i.e. at a later stage of vulcanisation).

In the case that a gas-purge cooling is undertaken at the supply step of the pressurising medium, the temperature becomes lower because of the earlier timing of the gas-purge, compared with the case where it is undertaken after the supply step of the pressurising medium and accordingly it takes a longer vulcanisation time.

In order to increase the homogeneity of the degree of vulcanisation by solving the problem of temperature difference, due to the drain collected at the lower side wall, between the upper side wall of the tyre in the mould and the lower side wall, i.e. the problem in the conventional gas vulcanisation method, or in order to control the degree of vulcanisation for the tyre having carcass cord such as polyester, Nylon 66 or the like, which suffer no decrease of strength even at a high temperature, so that the temperature is raised in an earlier state of vulcanisation and then decreased during the vulcanisation so as not to overcure the inner liner or the carcass, i.e. in order to keep the temperature in the internal space of the tyre low and to vulcanise for a longer period without causing a temperature difference between the upper and the lower side walls, a gas-purge cooling operation can be undertaken in the supply step for the pressurising medium (gas), as shown in Figure 2(A).

The gas cooling is usually undertaken once, but of course it is not restricted so. For example, in the case of a Nylon 6 carcass tyre, a temperature difference due to the accumulation of drain between the upper and lower side walls of the tyre can be solved by the first gas-purge cooling (in the gas supply process), and the tyre temperature can be decreased lower than the limit of 160°C by the second gas-purge cooling (after the gas supply process).

The cooling effect on the tyre in the mould depends on the diameter of the orifice installed in the "orifice" pipe line and the period of the gas-purge cooling, but the most important point for determining the cooling effect is to what extent the pressure in the internal space safely can be decreased. If it is decreased beyond the allowed pressure drop level (e.g. ca. 0.686 MPa (7kg/cm²)), bareness or porosity is caused or troubles of double moulding of side wall lettering is caused. The desired pressure of the internal space of the tyre on gas-purge cooling can be adjusted (e.g. 1.86 MPa (19 kg/cm²)) by the original pressure of the gas to be purged (e.g. 2.06 MPa (21 kg/cm²)), the orifice diameter (e.g. 5 mm) and the "inlet" pipe line diameter (e.g. 16 mm).

Firstly the orifice diameter is determined so that the pressure drop in an internal space of the tyre is within the allowed range. This orifice is attached to the "outlet" pipe line and the tyre is actually gas-vulcanised with the gas-purge cooling and temperature data of the tyre as formed by repeated experimental work to obtain how long a gas-purging step is required and at what size (mm's) of orifice diameter to obtain the required cooling effect.

Whether a fluid mixture of high temperature in the internal space of the tyre in the mould is certainly replaced by the gas-purging to a fluid of low temperature or not can easily be confirmed by a pressure graph.

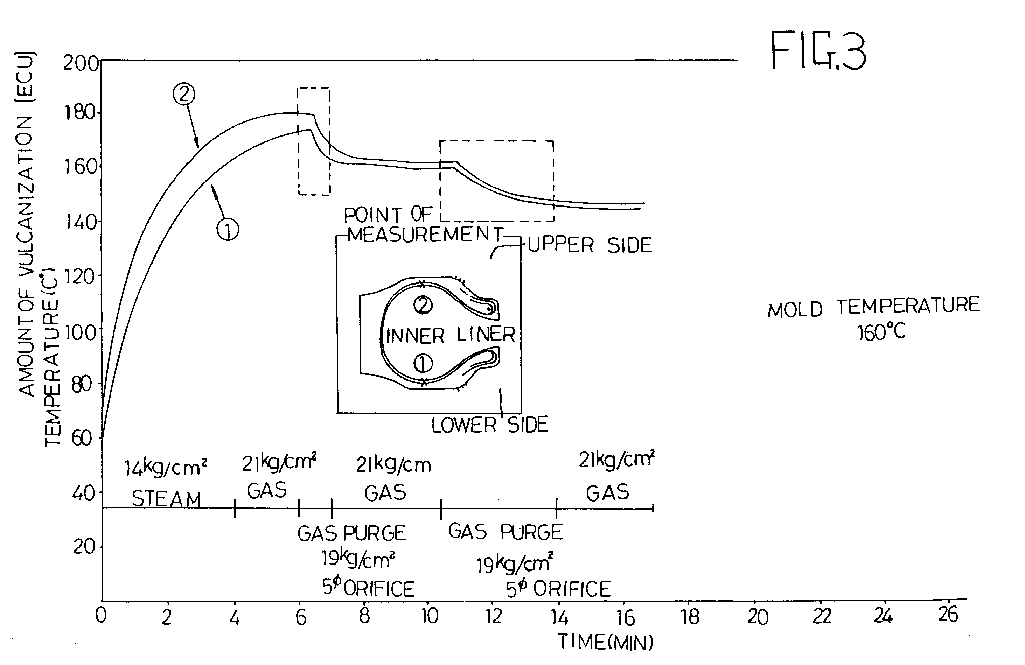

According to the method of the present invention, shown in Figure 3, a gas vulcanisation of an automobile tyre of 185SR13 size having Nylon 6 carcass ply in a BOM mould (at a temperature of 160°C) will be explained in the following. An orifice of a diameter of 5 mm was installed at position W in the gas exhaust pipe 115, valves V3-V4 of the "outlet" pipe line are closed and the valve V2 at the "inlet" pipe line is opened to supply steam at a temperature of 180°C with a pressure of 1.37 MPa (14 kg/cm²). After the lapse of a standard time of 4 minutes, the valve V2 is closed to stop the supply of steam and the valve V1 is opened to supply a gas at a pressure of 2.06 MPa (21 kg/cm²) and at a temperature of 40°C and then after the lapse of 2 minutes, the gas-purge cooling, shown in Figure 1, is undertaken. In other words, only the valve V4 of the gas exhaust pipe 115 is opened to exhaust (release into the atmosphere) the heated fluid mixture (at its pressure of 2.06 MPa (21 kg/cm²) and temperature of 180°C) from the internal space 120 of the tyre and to fill the internal space 120 with gas at a pressure of 2.06 MPa (21 kg/cm²) but at a temperature of 40°C instead.

After the lapse of 1 minute (when the pressure in the internal space 120 is decreased to about 1.86 MPa (19 kg/cm²), but the temperature of the inner liner of the tyre is decreased to about 168°C, for example, at the upper side wall 2 then the temperature difference between the upper and the lower side walls 1 and 2 is reduced to about 3°C and the homogeneity of the degree of vulcanisation is thus increased), valve V4 in the gas exhaust pipe 115 is closed while supplying the gas continuously. After the lapse of 3.5 minutes (when the pressure in the internal space 120 is then recovered to 2.06 MPa (21 kg/cm²) and the temperature of the inner line of the tyre is decreased to about 165°C at the upper side wall 2), the second gas-purge cooling is undertaken.

In other words, the valve V4 in the gas exhaust pipe 115 is opened again to exhaust the gas filling the internal space of the tyre and to fill the internal space 120 with the gas at a pressure of 2.06 MPa (21 kg/cm²) and a temperature of ca. 40°C instead. After the lapse of 3.5 minutes, (when the pressure in the internal space 120 has fallen to about 1.86 MPa (19 kg/cm²), and the temperature at the upper side wall 2 of the inner liner of the tyre is decreased to about 148°C, i.e. lower than the temperature level of about 160°C, where no decrease in strength is induced even at zero pressure of the internal space of the tyre 120 and the temperature difference between the upper and lower side walls 1 and 2 is lessened to about 2°C and the homogeneity of the degree of vulcanisation is increased further) the valve V4 in the gas exhaust pipe 115 is closed to the continuous supply of gas. Then after the lapse of 3 minutes, the valve V1 in the gas supply pipe 113 is closed to stop the supply of gas and the valve V4 in the gas exhaust pipe 115 is released to exhaust the gas from the internal space 120 of the tyre to decrease the pressure to zero.

Then by applying vacuum, the bladder 103 is shrunk to assist stripping of the tyre and then the mould is opened to take out the vulcanised tyre to finish the whole vulcanisation process. As it is clear in the above explanation, the fluid mixture in the present invention means a gas mixture of a vulcanising medium (steam, heated gas or the like) and of the pressurising medium (nitrogen gas, air or the like).

As detailed above, in the first example of the present invention, the gas-purge cooling is carried out in or after the pressurising medium supply process, by opening the "outlet" pipe line of the vulcanisation machine for a predetermined period with use of an orifice, thereby the flow rate is adjusted. Thus, a significant temperature difference between various portions of an elastomer product is avoided and an unfavourably big pressure drop is also avoided to effectively cool down the elastomer product toward not only achieving homogeneous vulcanisation, but minimising a cure delay trouble etc.

The following describes the second example of the present invention, where the timing of the gas-purge is immediately after the supply process of the heating medium. That is, when the supply process of heating medium is completed, the "outlet" pipe line 115 with the orifice 119 is immediately opened for a predetermined period so that at least part of or the whole of the steam in the internal space 120 of the tyre 104 set in the mould 102 is exhausted. As this purge proceeds, unheated pressurising gas which comes from the "inlet" pipe line 106 as noted before is introduced into the inner space 120 of the tyre to replace the pre-existing heating gas being purged. (The unheated pressurising gas is a new gas which has never been supplied to the space 120 from the gas tank, or in the case that a forced circulatory line is equipped, a used gas, which has been cooled and which is supplied via this forced circulatory line). In short, the gas-purge cooling is effected by replacing the heated heating medium pre-existing in the internal space 120 with a low temperature pressurising medium which is finished by closing the "outlet" pipe line 115.

The cooling effect for the tyre 104 in the mould 102 depends on the diameter of the "outlet" pipe and the time period for the gas-purge. The first point in determining a cooling effect for the tyre 104 lies in to what extent the pressure inside the internal space 120 can be reduced. If an actual pressure drops below an allowable level for pressure reduction (for example 0.686 MPa (7 kg/cm²)), such troubles as the bareness and porosity or double moulding of side wall lettering will take place. From the original pressure of a gas to be purged (for example 2.06 MPa (21 kg/cm²)), the diameter of the orifice (for example 5 mm), and the diameter of "inlet" pipe line for the gas (for example 16 mm), a desirable pressure level of the internal space (for example 1.86 MPa (19 kg/cm²)) at the time of gas-purge cooling can be determined.

The time period for the gas-purging is determined experimentally with sequential steps as below:

First, an orifice diameter is determined so that reduction of a pressure inside the internal space 120 will stay within the allowable range, and then a number of experimental cures using such an allowable orifice attached to the "outlet" pipe line including the gas-purge are carried out and the temperature data for the tyre 104 are obtained. By repeating such experiment work, the length of time for the gas-purging is found and the best diameter (mm) for the orifice to achieve a desirable cooling effect level.

Therein, whether or not the heated mixture medium in the internal space 120 is properly replaced by the low temperature medium may be confirmed readily by the use of a pressure graph.

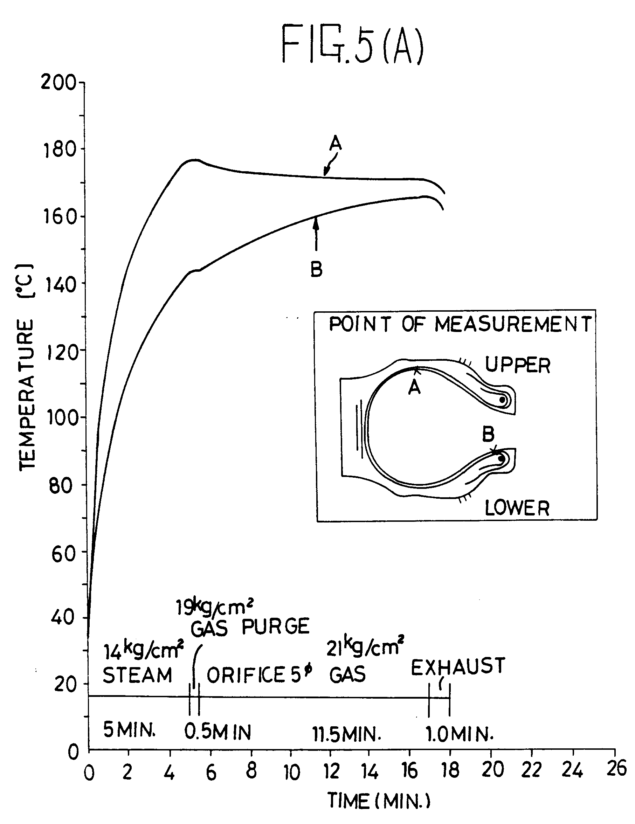

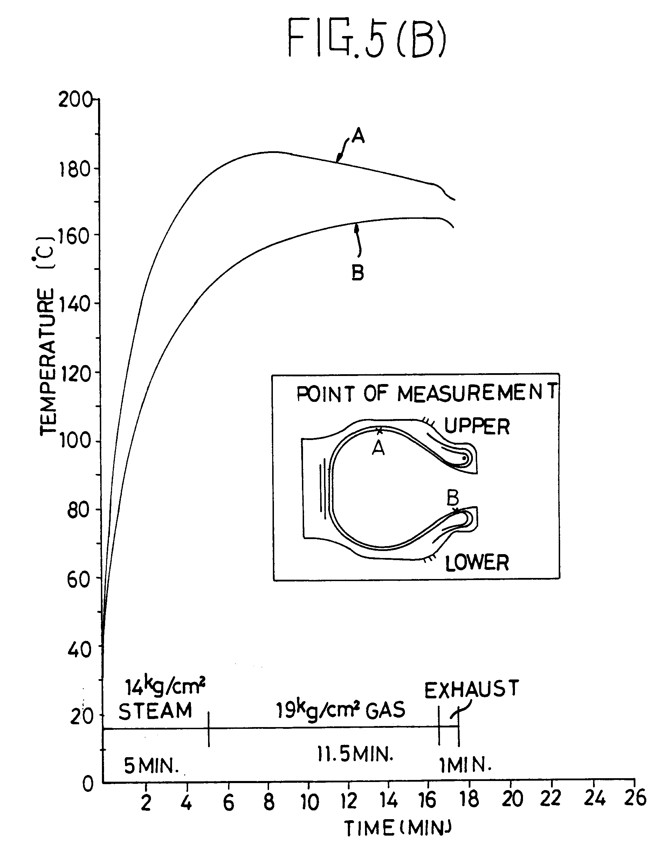

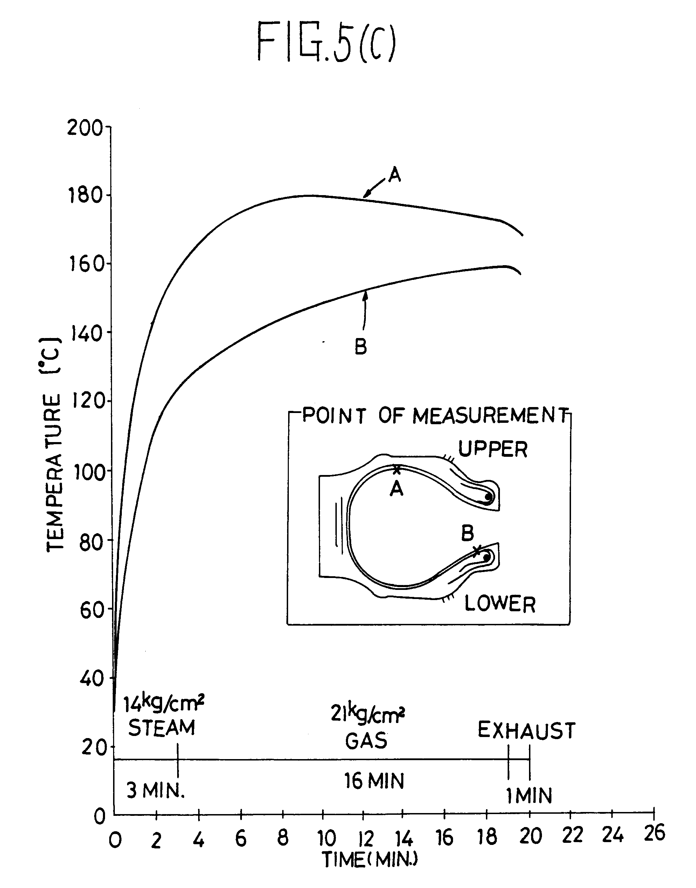

In the following, an embodiment will be described where the gas vulcanisation by a BOM vulcanisation machine (at a temperature of 160°C) was carried out for a light truck tyre of 205R16 size incorporated with polyester carcass ply in a manner as shown in Figure 1 and Figure 5(A).

At the position W of the gas exhaust pipe 115, an orifice having a 5 mm diameter was fitted, and then valves V3 to V5 in the outlet pipe were closed, and the valve V2 of the inlet pipe was opened to supply steam at 1.37 MPa (14 kg/cm²) pressure. After the lapse of the standard time of 5 minutes, the valve V2 is closed to stop the supply of steam and concurrently the valves V1 and V4 are opened to introduce a pressure gas having 1.86 MPa (19 kg/cm²) and 40°C for thirty seconds, thus causing the gas-purge cooling operation as shown in Figure 5(A). That is, by opening only the valve V4 for gas exhaust pipe, the heating medium (pressure: 1.37 MPa (14 kg/cm²)) resident in the internal space 120 is exhausted and instead, a gas at 1.86 MPa (19 kg/cm²) and 40°C is introduced to fill the internal space 120. After 30 seconds, as shown in Figure 5(A), the pressure in the internal space 120 increases to 1.86 MPa (19 kg/cm²), but assuming that the maximum temperature during the vulcanisation should be at 180°C in view of the physical properties of the carcass material, the temperature of the inner liner of the tyre can be set at less than 178°C in upper side wall portion A at the upper mould, and the temperature of the bead portion B at the lower mould where cure goes slow can be increased (as indicated by comparison of Figure 5(A) to Figure 5(B)). Then, the valve V4 of the gas exhaust pipe 115 is closed, but supply of the gas continues to successively enter into the normal supply process of pressurising gas. At this time, the pressure of the internal space 120 rises up to 2.06 MPa (21 kg/cm²), and the temperature of the tyre inner liner, in the upper side wall A, is lowered to about 170°C. However, the temperature of the bead portion B at the lower mould, as compared to conventional gas vulcanisation shown in Figure 5(C) rises much faster. After 11.5 minutes, the valve V1 of the gas supply line 113 is closed to stop the gas supply and the valve V4 of the gas exhaust pipe 115 is released to exhaust all gas in the internal space 120 down to zero pressure. Then, by applying vacuum, the bladder 103 is shrunk and taken out, and the mould 102a is opened to take out the vulcanised tyre, thus the whole cure process comes to an end.

As detailed above, the above intention features carrying out of the gas-purge cooling, immediately after the completion of the supply process of heating medium and before the following supply process of pressurising gas, with use of an orifice, by which the flow rate is adjusted in the "outlet" pipe line of the vulcanisation machine for a predetermined period. Thus, avoiding a significant temperature difference between various portions of the elastomer product, and minimising unfavourable pressure drop, thereby the temperature of the upper bead or shoulder portion at the lower mould is effectively prevented from rising excessively while the temperature of the lower bead or shoulder portion is accelerated to speed up the cure of the lower bead or shoulder portion where cure goes slow therefor, thus achieving a homogeneous vulcanisation with a shorter time.

The following Table 1 shows actually determined vulcanisation time and adhesion of a compound to carcass ply with the embodiment of Figure 5(A) and comparative results (1) and (2) in Figures 5(B) (C).

From the Table 1 it will be seen and understood that the inventive embodiment in Figure 5(A) has 2 minutes shorter vulcanisation time compared to the normal vulcanisation process (comparative embodiment (2)), and that, as compared to the comparative embodiment (1) which did not use the gas-purge and used the same heating period as in the inventive embodiment, the inventive one gives a superior tyre, which proves that during vulcanisation, temperature difference between the upper and lower portion of the tyre was reduced to a smaller level, thus achieving more uniform vulcanisation was realised.

**TABLE 1**

| | Vulcanization Time | Adhesion to Carcass Ply | Temperature Difference (see below) |
|---|---|---|---|
| Inventive Embodiment Fig. 5 (A) | 18.0 min | 100 | 15°c |
| Comparative Embodiment (1) Fig. 5 (B) | 17.5 min | 95 | 23°c |
| Comparative Embodiment (2) Fig. 5 (C) | 20.0 min | 100 | 32°c |
| Note: Temperature difference in the table indicates a temperature difference at 10 min after the start of vulcanization between the side wall portion of the upper side wall (A portion) at upper mould and the lower bead (B portion) at the lower-mould | | | |

## Claims

1. A method of curing an elastomer product in a mould, the mould having an inlet and an outlet pipe, the method comprising the steps of placing the elastomer product in a mould, supplying a heating steam or gas into an interior of said elastomer product through the inlet pipe to effect vulcanisation, supplying a pressurising gas through said inlet pipe with said outlet pipe open in order to cool the interior of said elastomer product by replacing at least a portion of said heating steam or gas present in the interior of said elastomer product with said pressurising gas, closing the outlet pipe while further supplying pressurising gas through said inlet pipe for further pressurising a mixed gas comprised of said heating steam or gas and said pressurising gas present in the interior of said elastomer product, and closing the inlet pipe and opening the outlet pipe to exhaust the mixed gas present in the interior of said elastomer product, whereby the steps are carried out sequentially in the given order.

2. The method of curing an elastomer product according to claim 1 characterised in that the inlet pipe is a single inlet for the mould and the outlet pipe is a single outlet for the mould and wherein the steps of supplying heating steam or gas, of supplying pressurising gas supplies the heating steam or gas, the pressurising gas to the interior of the elastomer product only through the single inlet and wherein the step of exhausting mixed gas exhausts mixed gas only through the single outlet.

3. The method of curing an elastomer product according to either of claims 1 or 2, characterised by further comprising the step of controlling discharge of the mixed gas during the step of supplying a pressurising gas, the step of controlling comprising using a flow control device mounted in the outlet pipe.

4. A method of curing an elastomer product in a mould, the mould having an inlet and an outlet pipe, the method comprising the steps of placing the elastomer product in the mould, supplying a heating steam or gas into an interior of said elastomer product through the inlet pipe to effect vulcanisation, supplying a pressurising gas for further pressurising said heating steam or gas present in the interior of said elastomer product through the inlet pipe with the outlet pipe closed, opening the outlet pipe while further supplying pressurising gas through said inlet pipe in order to cool the interior of said elastomer product by replacing at least a portion of a mixed gas comprised of said heating steam or gas and said pressurising gas present in the interior of said elastomer product with said pressurising gas, and closing the inlet pipe and opening the outlet pipe to exhaust a mixed gas comprised of said heating steam or gas, said pressurising gas present in the interior of said elastomer product at the end of vulcanisation whereby the steps are carried out sequentially in the given order.

5. The method of curing an elastomer product according to claim 4 characterised in that the inlet pipe is a single inlet for the mould and the outlet pipe is a single outlet for the mould and wherein the steps of supplying a heating steam or gas, of supplying a pressurising gas supplies the heating steam or gas, the pressurising gas to the interior of the elastomer product only through the single inlet and wherein the step of exhausting mixed gas exhausts mixed gas only through the single outlet.

6. The method of curing an elastomer product according to either of claims 4 and 5, characterised by further comprising the step of controlling discharge of the mixed gas during the step of further supplying a pressurising gas, the step of controlling comprising using a flow control device mounted in the outlet pipe.

7. A method of curing an elastomer product in a mould, the mould having an inlet and an outlet pipe, the method comprising the steps of placing the elastomer product in the mould, supplying a heating steam or gas into an interior of said elastomer product through the inlet pipe to effect vulcanisation, supplying a first pressurising gas for further pressurising said heating steam or gas present in the interior of said elastomer product through the inlet pipe with the outlet pipe closed, opening the outlet pipe while further supplying the first pressurising gas through said inlet pipe in order to cool the interior of said elastomer product by replacing at least a portion of a mixed gas comprised of said heating steam or gas and said first pressurising gas present in the interior of said elastomer product with said first pressurising gas, closing the outlet pipe and supplying a second pressurising gas for further pressurising a mixed gas comprised of said heating steam or gas, and said first pressurising gas present in the interior of said elastomer product through the inlet pipe, closing the inlet pipe and opening the outlet pipe to exhaust a mixed gas comprised of said heating steam or gas and said first and second pressurising gases present in the interior of said elastomer product at the end of vulcanisation whereby the steps are carried out separately in the given order.

8. The method of curing an elastomer product according to claim 7, characterised in that the inlet pipe is a single inlet for the mould and the outlet pipe is a single outlet for the mould and wherein the steps of supplying heating steam or gas, of supplying a first pressurising gas and of supplying a second pressurising gas supplies the heating steam or gas, the first pressurising gas and the second pressurising gas to the interior of the elastomer product only through the single inlet and wherein the step of exhausting mixed gas exhausts mixed gas only through the single outlet.

9. The method of curing an elastomer product according to either of claims 7 or 8, characterised by further comprising the step of controlling discharge of the mixed gas during the step of further supplying the first pressurising gas, the step of controlling comprising using a flow control device mounted in the outlet pipe.

10. A method of curing an elastomer product in a mould, the mould having an inlet pipe and an outlet pipe, the method comprising the steps of placing the elastomer product in a mould, supplying a heating steam or gas into an interior of said elastomer product through the inlet pipe to effect vulcanisation, closing the outlet pipe while supplying a pressurising gas through said inlet pipe for further pressurising the heating steam or gas present in the interior of said elastomer product, opening the outlet pipe while supplying the pressurising gas through said inlet pipe in order to cool the interior of said elastomer product by replacing at least a portion of a mixed gas comprised of said heating steam or gas and said pressurising gas present in the interior of said elastomer product, closing the outlet pipe while further supplying the pressurising gas through said inlet pipe for further pressurising the mixed gas present in the interior of said elastomer product, opening the outlet pipe while supplying the pressurising gas through said inlet pipe in order to cool the interior of said elastomer product by replacing at least a portion of the mixed gas present in the interior of said elastomer product, closing the outlet pipe while further supplying the pressurising gas through said inlet pipe for further pressurising the mixed gas present in the interior of said elastomer product, closing the inlet pipe and opening the outlet pipe to exhaust the mixed gas present in the interior of said elastomer product, whereby the steps are carried out sequentially in the given order.

11. A method of curing an elastomer product according to claim 10 characterised in that the inlet pipe is a single inlet for the mould and the outlet pipe is a single outlet for the mould and wherein the steps of supplying heating steam or gas, of supplying pressurising gas supplies the heating steam or gas, the pressurising gas to the interior of the elastomer product only through the single inlet and wherein the step of exhausting mixed gas exhausts mixed gas only through the single outlet.

12. A method of curing an elastomer product according to either of claims 10 or 11, characterised by further comprising the step of controlling discharge of the mixed gas during the step of supplying a pressurising gas, the step of controlling comprising using a flow control device mounted in the outlet pipe.

## Patentansprüche

1. Ein Verfahren zur Verfestigung eines elastomeren Produktes in einer Form mit einem Einlaß- und einem Auslaßrohr, wobei das Verfahren die Schritte umfaßt, daß das elastomere Produkt in einer Form angeordnet wird, daß ein Heizdampf oder -Gas in ein Inneres des elastomeren Produktes durch das Einlaßrohr zugeführt wird, um eine Vulkanisierung zu bewirken, daß ein Druckgas durch das Einlaßrohr bei offenem Auslaßrohr zugeführt wird, um das Innere des elastomeren Produktes durch Ersetzen von wenigstens einem Teil des Heizdampfes oder -Gases, der bzw. das im Inneren des elastomeren Produktes vorhanden ist, durch das Druckgas zu kühlen, daß das Auslaßrohr geschlossen wird, während weiter Druckgas durch das Einlaßrohr zugeführt wird, um weiter ein Mischgas mit dem Heizdampf oder -Gas und dem Druckgas, das im Inneren des elastomeren Produktes vorhanden ist, unter Druck zu setzen, und daß das Einlaßrohr geschlossen und das Auslaßrohr geöffnet wird, um das im Inneren des elastomeren Produktes vorhandene Mischgas auszustoßen, wobei die Schritte in der angegebenen Reihenfolge nacheinander ausgeführt werden.

2. Das Verfahren zur Verfestigung eines elastomeren Produktes nach Anspruch 1,
dadurch **gekennzeichnet**,
daß das Einlaßrohr ein einziger Einlaß für die Form ist, und das Auslaßrohr ein einziger Auslaß für die Form ist, und das die Schritte der Heizdampf- oder -Gaszufuhr und der Druckgaszufuhr den Heizdampf oder -Gas und das Druckgas zum Inneren des elastomeren Produktes nur durch den einzigen Einlaß zuführen, und der Schritt des Mischgasausstoßes Mischgas nur durch den einzigen Auslaß ausstößt.

3. Das Verfahren zur Verfestigung eines elastomeren Produktes nach Anspruch 1 oder 2,
dadurch **gekennzeichnet**,
daß es weiter den Schritt umfaßt, daß die Mischgasabgabe während des Schrittes der Zufuhr eines Druckgases gesteuert wird, wobei der Steuerungsschritt den Gebrauch eines in dem Außlaßrohr befestigten Flußsteuergerätes umfaßt.

4. Ein Verfahren zur Verfestigung eines elastomeren Produktes in einer Form mit einem Einlaß- und einem Auslaßrohr, wobei das Verfahren die Schritte umfaßt, daß das elastomere Produkt in der Form angeordnet wird, daß ein Heizdampf oder -Gas in ein Inneres des elastomeren Produktes durch das Einlaßrohr zugeführt wird, um eine Vulkanisierung zu bewirken, daß ein Druckgas durch das Einlaßrohr bei geschlossenem Auslaßrohr zugeführt wird, um weiter den Heizdampf oder -Gas, der bzw. das im Inneren des elastomeren Produktes vorhanden ist, unter Druck zu setzen, daß das Auslaßrohr geöffnet wird, während weiter Druckgas durch das Einlaßrohr zugeführt wird, um das Innere des elastomeren Produktes durch Ersetzen von wenigstens einem Teil eines Mischgases mit dem Heizdampf oder -Gas und dem Druckgas, das im Inneren des elastomeren Produktes vorhanden ist, durch das Druckgas zu kühlen, und daß das Einlaßrohr geschlossen und das Auslaßrohr geöffnet wird, um ein Mischgas mit dem Heizdampf oder -Gas und dem Druckgas, das im Inneren des elastomeren Produktes am Ende der Vulkanisierung vorhanden ist, auszustoßen, wobei die Schritte in der angegebenen Reihenfolge nacheinander ausgeführt werden.

5. Das Verfahren zur Verfestigung eines elastomeren Produktes nach Anspruch 4,
dadurch **gekennzeichnet**,
daß das Einlaßrohr ein einziger Einlaß für die Form ist, und das Auslaßrohr ein einziger Auslaß für die Form ist, und das die Schritte der Heizdampf- oder -Gaszufuhr und der Druckgaszufuhr den Heizdampf oder -Gas und das Druckgas zum Inneren des elastomeren Produktes nur durch den einzigen Einlaß zuführen, und der Schritt des Mischgasausstoßes Mischgas nur durch den einzigen Auslaß ausstößt.

6. Das Verfahren zur Verfestigung eines elastomeren Produktes nach einem der Ansprüche 4 und 5,
dadurch **gekennzeichnet**,
daß es weiter den Schritt umfaßt, daß die Mischgasabgabe während des Schrittes der weiteren Zufuhr eines Druckgases gesteuert wird, wobei der Steuerungsschritt den Gebrauch eines in dem Außlaßrohr befestigten Flußsteuergerätes umfaßt.

7. Ein Verfahren zur Verfestigung eines elastomeren Produktes in einer Form mit einem Einlaß- und einem Auslaßrohr, wobei das Verfahren die Schritte umfaßt, daß das elastomere Produkt in der Form angeordnet wird, daß ein Heizdampf oder -Gas in ein Inneres des elastomeren Produktes durch das Einlaßrohr zugeführt wird, um eine Vulkanisierung zu bewirken, daß ein ersten Druckgas durch das Einlaßrohr bei geschlossenem Auslaßrohr zugeführt wird, um weiter den Heizdampf oder -Gas, der bzw. das im Inneren des elastomeren Produktes vorhanden ist, unter Druck zu setzen, daß das Auslaßrohr geöffnet wird, während weiter das erste Druckgas durch das Einlaßrohr zugeführt wird, um das Innere des elastomeren Produktes durch Ersetzen von wenigstens einem Teil eines Mischgases mit dem Heizdampf oder -Gas und dem ersten Druckgas, das im Inneren des elastomeren Produktes vorhanden ist, durch das erste Druckgas zu kühlen, daß das Auslaßrohr geschlossen wird und daß ein zweites Druckgas durch das Einlaßrohr zugeführt wird, um weiter ein Mischgas mit dem Heizdampf oder -Gas und dem ersten Druckgas, das im Inneren des elastomeren Produktes vorhanden ist, unter Druck zu setzen, daß das Einlaßrohr geschlossen und das Auslaßrohr geöffnet wird, um ein Mischgas mit dem Heizdampf oder -Gas und den ersten und zweiten Druckgasen, das im Inneren des elastomeren Produktes vorhanden ist, am Ende der Vulkanisierung auszustoßen, wobei die Schritte getrennt in der angegebenen Reihenfolge ausgeführt werden.

8. Das Verfahren zur Verfestigung eines elastomeren Produktes nach Anspruch 7,
dadurch **gekennzeichnet**,
daß das Einlaßrohr ein einziger Einlaß für die Form ist, und das Auslaßrohr ein einziger Auslaß für die Form ist, und das die Schritte der Heizdampf- oder -Gaszufuhr, der Zufuhr eines ersten Druckgases und der Zufuhr eines zweiten Druckgases den Heizdampf oder -Gas, das erste Druckgas und das zweite Druckgas zum Inneren des elastomeren Produktes nur durch den einzigen Einlaß zuführen, und der Schritt des Mischgasausstoßes Mischgas nur durch den einzigen Auslaß ausstößt.

9. Das Verfahren zur Verfestigung eines elastomeren Produktes nach Anspruch 7 oder 8,
dadurch **gekennzeichnet**,
daß es weiter den Schritt umfaßt, daß die Mischgasabgabe während des Schrittes der weiteren Zufuhr des ersten Druckgases gesteuert wird, wobei der Steuerungsschritt den Gebrauch eines in dem Außlaßrohr befestigten Flußsteuergerätes umfaßt.

10. Ein Verfahren zur Verfestigung eines elastomeren Produktes in einer Form mit einem Einlaßrohr und einem Auslaßrohr, wobei das Verfahren die Schritte umfaßt, daß das elastomere Produkt in einer Form angeordnet wird, daß ein Heizdampf oder -Gas in ein Inneres des elastomeren Produktes durch das Einlaßrohr zugeführt wird, um eine Vulkanisierung zu bewirken, daß das Auslaßrohr geschlossen wird, während ein Druckgas durch das Einlaßrohr zugeführt wird, um weiter den Heizdampf oder -Gas, der bzw. das im Inneren des elastomeren Produktes vorhanden ist, unter Druck zu setzen, daß das Auslaßrohr geöffnet wird, während das Druckgas durch das Einlaßrohr zugeführt wird, um das Innere des elastomeren Produktes, durch Ersetzen von wenigstens einem Teil eines Mischgases mit dem Heizdampf oder -Gas und dem Druckgas, das im Inneren des elastomeren Produktes vorhanden ist, zu kühlen, daß das Auslaßrohr geschlossen wird, während weiter Druckgas durch das Einlaßrohr zugeführt wird, um weiter das im Inneren des elastomeren Produktes vorhandene Mischgas unter Druck zu setzen, daß das Auslaßrohr geöffnet wird, während das Druckgas durch das Einlaßrohr zugeführt wird, um das Innere des elastomeren Produktes durch Ersetzen von wenigstens einem Teil des im Inneren des elastomeren Produktes vorhandenen Mischgases zu kühlen, daß das Auslaßrohr geschlossen wird, während weiter das Druckgas durch das Einlaßrohr zugeführt wird, um weiter das im Inneren des elastomeren Produktes vorhandene Mischgas unter Druck zu setzen, daR das Einlaßrohr geschlossen und das Auslaßrohr geöffnet wird, um das im Inneren des elastomeren Produktes vorhandene Mischgas auszustoßen, wobei die Schritte nacheinander in der angegebenen Reihenfolge ausgeführt werden.

11. Ein verfahren zur Verfestigung eines elastomeren Produktes nach Anspruch 10,
dadurch **gekennzeichnet**,
daß das Einlaßrohr ein einziger Einlaß für die Form ist, und das Auslaßrohr ein einziger Auslaß für die Form ist, und das die Schritte der Heizdampf- oder Gaszufuhr und der Druckgaszufuhr den Heizdampf oder -Gas und das Druckgas zum Inneren des elastomeren Produktes nur durch den einzigen Einlaß zuführen, und der Schritt eines Mischgasausstoßes Mischgas nur durch den einzigen Auslaß ausstößt.

12. Ein verfahren zur Verfestigung eines elastomeren Produktes nach Anspruch 10 oder 11,
dadurch **gekennzeichnet**,
daß es weiter den Schritt umfaßt, daß die Mischgasabgabe während des Schrittes der Zufuhr eines Druckgases gesteuert wird, wobei der Steuerungsschritt den Gebrauch eines in dem Außlaßrohr befestigten Flußsteuergerätes umfaßt.

## Revendications

1. Procédé de cuisson d'un produit élastomère dans un moule, le moule présentant un tuyau d'entrée et de sortie, le procédé comprenant les étapes consistant à placer le produit élastomère dans un moule, à introduire un gaz ou de la vapeur de chauffage à l'intérieur dudit produit élastomère par l'intermédiaire du tuyau d'entrée pour réaliser une vulcanisation, à introduire un gaz de mise en pression par l'intermédiaire dudit tuyau d'entrée avec ledit tuyau de sortie ouvert afin de refroidir l'intérieur dudit produit élastomère en remplaçant au moins une partie dudit gaz ou de ladite vapeur de chauffage présent à l'intérieur dudit produit élastomère par ledit gaz de mise en pression, à fermer le tuyau de sortie tout en introduisant encore du gaz de mise en pression par l'intermédiaire dudit tuyau d'entrée pour pressuriser encore un mélange de gaz constitué dudit gaz ou de ladite vapeur de chauffage et dudit gaz de mise en pression présent à l'intérieur dudit produit élastomère, et à fermer le tuyau d'entrée et à ouvrir le tuyau de sortie pour évacuer le mélange de gaz présent à l'intérieur dudit produit élastomère, les étapes étant successivement réalisées dans l'ordre donné.

2. Procédé de cuisson d'un produit élastomère selon la revendication 1, caractérisé en ce que le tuyau d'entrée est une entrée unique pour le moule et le tuyau de sortie est une sortie unique pour le moule et dans lequel les étapes consistant à introduire du gaz ou de la vapeur de chauffage, consistant à introduire du gaz de mise en pression introduisent le gaz ou la vapeur de chauffage, le gaz de mise en pression à l'intérieur du produit élastomère seulement par l'intermédiaire de l'entrée unique et dans lequel l'étape consistant à évacuer le mélange de gaz évacue le mélange de gaz seulement par l'intermédiaire de la sortie unique.

3. Procédé de cuisson d'un produit élastomère selon l'une quelconque des revendications 1 ou 2, caractérisé en ce qu'il comprend en outre l'étape consistant à régler la décharge du mélange de gaz pendant l'étape consistant à introduire un gaz de mise en pression, l'étape de réglage consistant à utiliser un dispositif de réglage de débit monté sur le tuyau de sortie.

4. Procédé de cuisson d'un produit élastomère dans un moule, le moule présentant un tuyau d'entrée et de sortie, le procédé comprenant les étapes consistant à placer le produit élastomère dans le moule, à introduire un gaz ou de la vapeur de chauffage à l'intérieur dudit produit élastomère par l'intermédiaire du tuyau d'entrée pour réaliser une vulcanisation, à introduire un gaz de mise en pression pour pressuriser encore ledit gaz ou de ladite vapeur de chauffage présent à l'intérieur dudit produit élastomère par l'intermédiaire du tuyau d'entrée avec le tuyau de sortie fermé, à ouvrir le tuyau de sortie tout en introduisant encore du gaz de mise en pression par l'intermédiaire dudit tuyau d'entrée afin de refroidir l'intérieur dudit produit élastomère en remplaçant au moins une partie du mélange de gaz constitué dudit gaz ou de ladite vapeur de chauffage et dudit gaz de mise en pression présent à l'intérieur dudit produit élastomère par ledit gaz de mise en pression, et à fermer le tuyau d'entrée et à ouvrir le tuyau de sortie pour évacuer un mélange de gaz constitué dudit gaz ou de ladite vapeur de chauffage, dudit gaz de mise en pression présent à l'intérieur dudit produit élastomère à la fin de la vulcanisation, les étapes étant successivement réalisées dans l'ordre donné.

5. Procédé de cuisson d'un produit élastomère selon la revendication 4, caractérisé en ce que le tuyau d'entrée est une entrée unique pour le moule et que le tuyau de sortie est une sortie unique pour le moule et dans lequel les étapes consistant à introduire un gaz ou de la vapeur de chauffage, consistant à introduire un gaz de mise en pression introduisent le gaz ou la vapeur de chauffage, le gaz de mise en pression à l'intérieur du produit élastomère seulement par l'intermédiaire de l'entrée unique et dans lequel l'étape consistant à évacuer le mélange de gaz évacue le mélange de gaz seulement par l'intermédiaire de la sortie unique.

6. Procédé de cuisson d'un produit élastomère selon l'une quelconque des revendications 4 et 5, caractérisé en ce qu'il comprend en outre l'étape consistant à régler la décharge du mélange de gaz pendant l'étape consistant à introduire encore un gaz de mise en pression, l'étape de réglage consistant à utiliser un dispositif de réglage de débit monté sur le tuyau de sortie.

7. Procédé de cuisson d'un produit élastomère dans un moule, le moule présentant un tuyau d'entrée et de sortie, le procédé comprenant les étapes consistant à placer le produit élastomère dans le moule, à introduire un gaz ou de la vapeur de chauffage à l'intérieur dudit produit élastomère par l'intermédiaire du tuyau d'entrée pour réaliser une vulcanisation, à introduire un premier gaz de mise en pression pour pressuriser encore ledit gaz ou ladite vapeur de chauffage présent à l'intérieur dudit produit élastomère par l'intermédiaire du tuyau d'entrée avec le tuyau de sortie fermé, à ouvrir le tuyau de sortie tout en introduisant encore le premier gaz de mise en pression par l'intermédiaire dudit tuyau d'entrée afin de refroidir l'intérieur dudit produit élastomère en remplaçant au moins une partie d'un mélange de gaz constitué dudit gaz ou de ladite vapeur de chauffage et dudit premier gaz de mise en pression présent à l'intérieur dudit produit élastomère par ledit premier gaz de mise en pression, à fermer le tuyau de sortie et à introduire un second gaz de mise en pression pour pressuriser encore un mélange de gaz constitué dudit gaz ou de ladite vapeur de chauffage et dudit premier gaz de mise en pression présent à l'intérieur dudit produit élastomère par l'intermédiaire du tuyau d'entrée, à fermer le tuyau d'entrée et à ouvrir le tuyau de sortie pour évacuer un mélange de gaz constitué dudit gaz ou de ladite vapeur de chauffage et desdits premier et second gaz de mise en pression présents à l'intérieur dudit produit élastomère à la fin de la vulcanisation, les étapes étant séparément réalisées dans l'ordre donné.

8. Procédé de cuisson d'un produit élastomère selon la revendication 7, caractérisé en ce que le tuyau d'entrée est une entrée unique pour le moule et le tuyau de sortie est une sortie unique pour le moule et dans lequel les étapes consistant à introduire du gaz ou de la vapeur de chauffage, consistant à introduire un premier gaz de mise en pression et consistant à introduire un second gaz de mise en pression introduisent le gaz ou la vapeur de chauffage, le premier gaz de mise en pression et le second gaz de mise en pression à l'intérieur du produit élastomère seulement par l'intermédiaire de l'entrée unique et dans lequel l'étape consistant à évacuer le mélange de gaz évacue le mélange de gaz seulement par l'intermédiaire de la sortie unique.

9. Procédé de cuisson d'un produit élastomère selon l'une quelconque des revendications 7 ou 8, caractérisé en ce qu'il comprend en outre l'étape consistant à régler la décharge du mélange de gaz pendant l'étape consistant à introduire encore le premier gaz de mise en pression, l'étape de réglage consistant à utiliser un dispositif de réglage de débit monté sur le tuyau de sortie.

10. Procédé de cuisson d'un produit élastomère dans un moule, le moule présentant un tuyau d'entrée et un tuyau de sortie, le procédé comprenant les étapes consistant à placer le produit élastomère dans un moule, à introduire un gaz ou de la vapeur de chauffage à l'intérieur dudit produit élastomère par l'intermédiaire du tuyau d'entrée pour réaliser une vulcanisation, à fermer le tuyau de sortie tout en introduisant un gaz de mise en pression par l'intermédiaire dudit tuyau d'entrée pour pressuriser encore le gaz ou la vapeur de chauffage présent à l'intérieur dudit produit élastomère, à ouvrir le tuyau de sortie tout en introduisant le gaz de mise en pression par l'intermédiaire dudit tuyau d'entrée afin de refroidir l'intérieur dudit produit élastomère en remplaçant au moins une partie d'un mélange de gaz constitué dudit gaz ou de ladite vapeur de chauffage et dudit gaz de mise en pression présent à l'intérieur dudit produit élastomère, à fermer le tuyau de sortie tout en introduisant encore le gaz de mise en pression par l'intermédiaire dudit tuyau d'entrée pour pressuriser encore le mélange de gaz présent à l'intérieur dudit produit élastomère, à ouvrir le tuyau de sortie tout en introduisant le gaz de mise en pression par l'intermédiaire dudit tuyau d'entrée afin de refroidir l'intérieur dudit produit élastomère en remplaçant au moins une partie du mélange de gaz présent à l'intérieur dudit produit élastomère, à fermer le tuyau de sortie tout en introduisant encore le gaz de mise en pression par l'intermédiaire dudit tuyau d'entrée pour pressuriser encore le mélange de gaz présent à l'intérieur dudit produit élastomère, à fermer le tuyau d'entrée et à ouvrir le tuyau de sortie pour évacuer le mélange de gaz présent à l'intérieur dudit produit élastomère, les étapes étant successivement réalisées dans l'ordre donné.

11. Procédé de cuisson d'un produit élastomère selon la revendication 10, caractérisé en ce que le tuyau d'entrée est une entrée unique pour le moule et le tuyau de sortie est une sortie unique pour le moule et dans lequel les étapes consistant à introduire le gaz ou la vapeur de chauffage, consistant à introduire le gaz de mise en pression introduisent le gaz ou la vapeur de chauffage, le gaz de mise en pression à l'intérieur du produit élastomère seulement par l'intermédiaire de l'entrée unique et dans lequel l'étape consistant à évacuer le mélange de gaz évacue le mélange de gaz seulement par l'intermédiaire de la sortie unique.

12. Procédé de cuisson d'un produit élastomère selon l'une quelconque des revendications 10 ou 11, caractérisé en ce qu'il comprend en outre l'étape consistant à régler la décharge du mélange de gaz pendant l'étape consistant à introduire un gaz de mise en pression, l'étape de réglage consistant à utiliser un dispositif de réglage de débit monté sur le tuyau de sortie.
